# EUROPÄISCHE PATENTSCHRIFT

(11) **EP 2 560 250 B1**
(45) Veröffentlichungstag und Bekanntmachung des Hinweises auf die Patenterteilung: **26.07.2023**
(21) Anmeldenummer: 12180068.4
(22) Anmeldetag: 10.08.2012
(51) Int. Cl.: H01S 3/00, H01S 3/13, H05H 7/02

(54) **System und Verfahren zum Erzeugen eines Synchronisationssteuersignals**
System and method for generating a synchronisation control signal
Dispositif et procédé destinés à produire un signal de commande de synchronisation

(30) Priorität: 19.08.2011 DE 102011111114
(43) Veröffentlichungstag der Anmeldung: 20.02.2013
(73) Patentinhaber: Deutsches Elektronen-Synchrotron DESY, 22607 Hamburg (DE)
(72) Erfinder: Schlarb, Holger, 22549 Hamburg (DE); Lamb, Thorsten, 22767 Hamburg (DE)
(74) Vertreter: Bird & Bird LLP

(56) Entgegenhaltungen:
- EP-A2- 2 172 817
- US-A1- 2003 058 503

## Beschreibung

Die vorliegende Erfindung betrifft ein System zum Erzeugen eines Synchronisationssteuersignals, um ein Hochfrequenzsignal mit einer Frequenz f_{Hf} und ein gepulstes optisches Signal zu synchronisieren. Des Weiteren betrifft die vorliegende Erfindung eine Hochfrequenzsynchronisationseinrichtung und eine optische Synchronisationseinrichtung zum Synchronisieren eines Hochfrequenzoszillators und eines gepulsten optischen Signals. Insbesondere bei Beschleunigeranlagen, die mit gepulsten Strahlen arbeiten und bei denen eine Vielzahl von Elementen zur Strahlführung sowie Experimentierplätze synchron zu dem gepulsten Strahl des Beschleunigers gesteuert werden müssen, ist es erforderlich, Hochfrequenzsignale, die in den einzelnen Experimentierplätzen verwendet werden, mit einer optischen Referenz, nämlich einem gepulsten Laserstrahl zu synchronisieren. Bei diesem Laserstrahl kann es sich vorzugsweise um einen Erbium-Laser handeln, der Pulse mit einer Repetitionsrate von 216,6 MHz emittiert, wobei diese Repetitionsrate extrem genau eingestellt werden kann.

Für die einzelnen Elemente der Beschleunigeranlage ist es dann erforderlich, dass die darin verwendeten Hochfrequenzsignale exakt zu den Pulsen des Lasers synchronisiert werden, was bedeutet, dass beispielsweise ein Nulldurchgang des Hochfrequenzsignals mit einem Laserpuls genau zusammenfällt.

Darüber hinaus ist es auch in anderen Gebieten von Interesse, optische und elektrische Signale miteinander zu synchronisieren.

Die EP 2 172 817 A2, von der die vorliegende Erfindung ausgeht, beschreibt ein System und ein Verfahren zum Erzeugen eines Synchronisationssteuersignals, um ein Hochfrequenzsignal und ein gepulstes optisches Signal zu synchronisieren, wobei ein elektro-optischer Modulator verwendet wird, dessen Spannungseingang mit dem Hochfrequenzsignal beaufschlagt wird, um das gepulste optische Signal zu modulieren. Darüber hinaus ist auch beschrieben, dass das modulierte gepulste optische Signal und das unmodulierte gepulste optische Signal gemischt werden, um ein Synchronisationssteuersignal zu erhalten.

Die US 2003/0058503 A1 offenbart ein System zur Wiedergewinnung eines elektro-optischen Zeitsignals, wobei die Verwendung eines Mach-Zehnder-Modulators offenbart wird.

Daher ist es die Aufgabe der vorliegenden Erfindung, ein System und ein Verfahren zum Erzeugen eines Synchronisationssteuersignals zum Synchronisieren eines Hochfrequenzsignals und eines optischen Signals bereitzustellen, das eine extrem genaue Einstellung erlaubt und auch über sehr lange Zeiträume stabil ist.

Diese Aufgabe wird gelöst durch ein System zum Erzeugen eines Synchronisationssteuersignals gemäß Anspruch 1.

Es ist ein erfindungsgemäßes System, um ein Hochfrequenzsignal mit einer Frequenz f_{Hf} und ein gepulstes optisches Signal zu synchronisieren, beschrieben mit einem Hochfrequenzsignaleingang für das Hochfrequenzsignal, mit einem Eingang für das mit einer Repetitionsrate f_{R} gepulste optische Signal, mit einem elektro-optischen Amplitudenmodulator, der einen optischen Eingang, einen Spannungseingang, der mit dem Phasenglied des Amplitudenmodulators verbunden ist, und einen optischen Ausgang aufweist, mit einem Phasenverschiebungsregler, der einen Reglereingang und einen Reglerausgang, an dem das Synchronisationssteuersignal ausgegeben wird, aufweist, mit einem Phasenverschiebungsmischer, der einen Hochfrequenzeingang, einen Lokaloszillatoreingang und einen Ausgang aufweist, mit einem ersten und einem zweiten Photodetektor, die einen optischen Eingang und einen Ausgang aufweisen, mit einer optischen Eingangsverbindung, die den Eingang für das optische Signal mit dem optischen Eingang des elektro-optischen Amplitudenmodulators verbindet, und mit einem Eingangssplitter, der in der Eingangsverbindung angeordnet ist, um das optische Signal zusätzlich an einem Abzweig des Eingangssplitters auszugeben, wobei der Hochfrequenzsignaleingang mit dem Spannungseingang des elektro-optischen Amplitudenmodulators verbunden ist, wobei der Abzweig des Eingangssplitters mit dem optischen Eingang des ersten Photodetektors verbunden ist, wobei der Ausgang des ersten Photodetektors mit dem Lokaloszillatoreingang des Phasenverschiebungsmischers verbunden ist, wobei der optische Ausgang des elektro-optischen Amplitudenmodulators mit dem optischen Eingang des zweiten Photodetektors verbunden ist, wobei der Ausgang des zweiten Photodetektors mit dem Hochfrequenzeingang des Phasenverschiebungsmischers verbunden ist und wobei der Ausgang des Phasenverschiebungsmischers mit dem Reglereingang des Phasenverschiebungsreglers verbunden ist.

Vorzugsweise ist der elektro-optische Amplitudenmodulator als Mach-Zehnder-Modulator ausgeführt, der zwei optische Pfade aufweist, wobei in einem Pfad ein Phasenglied vorgesehen ist, in dem ein hindurch laufendes optisches Signal bei einer daran anliegenden elektrischen Spannung in seiner Phasenlage verändert wird. Das durch das Phasenglied laufende Signal wird danach mit dem durch den anderen Pfad laufende Signal rekombiniert, wodurch sich bei einer veränderten Phasenlage eine Amplitudenmodulation des Gesamtsignals im Vergleich zum Eingangssignal ergibt.

Bei den in der vorliegenden Erfindung verwendeten "Mischern", also dem Phasenverschiebungsmischer, dem Vorspannungsmischer und dem Wellenplattenmischer, handelt es sich vorzugsweise um herkömmliche Hochfrequenzmischer, die einen Lokaloszillatoreingang, einen Hochfrequenzeingang und Ausgang aufweisen und zur Erzeugung des jeweiligen Fehlersignals am Ausgang eingesetzt werden.

Das erfindungsgemäße System ermöglicht nun, dass am Reglerausgang des Phasenverschiebungsreglers ein Synchronisationssteuersignal ausgegeben wird, das entweder verwendet werden kann, um die Phasenlage einer Hochfrequenzquelle zu steuern oder die Phasenlage des optischen Referenzsignals. Dabei kann die Steuerung der Phasenlage auch in der Weise erfolgen, dass die Frequenz der jeweiligen Quelle kurzzeitig erhöht oder abgesenkt wird. Dabei arbeitet das erfindungsgemäße System wie folgt.

Das gepulste optische Signal wird in den elektro-optischen Amplitudenmodulator eingekoppelt, und wenn ein Puls des optischen Signals nicht mit einem Nulldurchgang des Hochfrequenzsignals zusammenfällt, wird die Amplitude des optischen Ausgangssignals am optischen Ausgang moduliert, d.h. abgesenkt oder angehoben abhängig von dem Wert des Hochfrequenzsignals zum Zeitpunkt des optischen Pulses. Dieses modulierte optische Ausgangssignal wird mithilfe des zweiten Photodetektors in ein elektrisches Ausgangssignal umgewandelt bzw. konvertiert, wobei dieses dem Hochfrequenzeingang des Phasenverschiebungsmischers zugeführt wird. Gleichzeitig wird dem Phasenverschiebungsmischer über dessen Lokaloszillatoreingang ein mithilfe des ersten Photodetektors aus dem optischen Signal erzeugtes Hochfrequenzsignal bzw. elektrisches Eingangssignal zugeführt, sodass nach dem Phasenverschiebungsmischer ein Gleichspannungssignal vorliegt, dessen Höhe proportional zur Amplitude der Schwebung ist, die durch die Modulation der Pulse des optischen Signals in dem elektro-optischen Amplitudenmodulator erzeugt wird und die am zweiten Photodetektor in ein elektrisches Ausgangssignal umgewandelt wird. Dieses Gleichspannungssignal wird in den Phasenverschiebungsregler gegeben, dessen Ausgang dann das Steuersignal erzeugt, das entweder für die Hochfrequenzquelle oder die Quelle für das optische Signal zur Steuerung der jeweiligen Phasenlage eingesetzt werden kann.

Somit wird erfindungsgemäß allgemein in der Weise zum Erzeugen eines Synchronisationssteuersignals vorgegangen, dass das optische Signal in den optischen Eingang eines elektro-optischen Amplitudenmodulators gegeben wird, wobei das Hochfrequenzsignal in dessen Spannungseingang gegeben wird, wobei das am optischen Ausgang ausgegebene optische Ausgangssignal in ein elektrisches Ausgangssignal konvertiert wird, wobei aus dem elektrischen Ausgangssignal ein Gleichspannungssignal erzeugt wird, dessen Höhe der Amplitude einer dem optischen Ausgangssignal aufgeprägten Schwebung entspricht, und wobei das Gleichspannungssignal einem Reglereingang eines Phasenverschiebungsreglers zugeführt wird, der das Synchronisationssteuersignal ausgibt. Insbesondere wird ein Teil des optischen Signals vor dem Eingang des elektro-optischen Amplitudenmodulators abgespalten und in ein elektrisches Eingangssignal konvertiert, wobei das elektrische Eingangssignal und das elektrische Ausgangssignal derart gemischt werden, dass das Gleichspannungssignal, das dem Reglereingang eines Phasenverschiebungsreglers zugeführt wird, erzeugt wird.

Somit wird ein einfach aufgebautes System bereitgestellt, das zuverlässig die Phasenlage des Hochspannungssignals relativ zu den Pulsen des optischen Signals erfasst und ein entsprechendes Steuersignal bereitstellt.

Wenn die Frequenz des Hochfrequenzsignals f_{Hf} ein halbzahliges Vielfaches der Repetitionsrate f_{R} ist, mit der die Pulse des gepulsten optischen Signals emittiert werden, ist dem ersten Photodetektor ein Frequenzteiler nachgeschaltet, und zwischen dem zweiten Photodetektor und dem Hochfrequenzeingang des Phasenmischers ist ein Bandpassfilter vorgesehen, dessen Mittenfrequenz f_{R}/2 beträgt.

Das elektrische Eingangssignal wird also gegenüber der Repetitionsrate f_{R} in der Frequenz halbiert, wobei das elektrische Ausgangssignal mit einer Mittenfrequenz von der Hälfte der Repetitionsrate bandpassgefiltert wird.

Dies stellt sicher, dass in dem Phasenverschiebungsmischer Hochfrequenzsignale mit gleicher Frequenz zur Wechselwirkung gebracht werden.

Erfindungsgemäß ist das System versehen mit einem ersten Leistungsteiler, der einen Eingang, einen ersten Ausgang und einen zweiten Ausgang aufweist und mit einem Vorspannungsregler, der einen Reglereingang und einen Reglerausgang aufweist, wobei der Ausgang des zweiten Photodetektors mit dem Eingang des ersten Leistungsteilers verbunden ist, wobei der erste Ausgang des ersten Leistungsteilers mit dem Hochfrequenzeingang des Phasenverschiebungsmischers verbunden ist, wobei der zweite Ausgang des ersten Leistungsteilers mit dem Reglereingang des Vorspannungsreglers verbunden ist und wobei der Reglerausgang des Vorspannungsreglers mit dem Vorspannungseingang des elektro-optischen Amplitudenmodulators verbunden ist.

Bei einer derartigen Ausführungsform wird das von der zweiten Photoelektrode aus dem im elektro-optischen Amplitudenmodulator modulierten optischen Ausgangssignal erzeugte Hochfrequenzsignal bzw. elektrische Ausgangssignal vorzugsweise über einen Tiefpassfilter einem Vorspannungsregler zugeführt, sodass dieser die Vorspannung am Amplitudenmodulator derart einregeln kann, dass in dem Fall, dass das optische Signal nicht moduliert wird, also die Phasenlage zwischen optischem Signal und Hochfrequenzsignal korrekt ist, das vom Modulator ausgegebene Signal den gewünschten Pegel hat. Allgemein wird also das elektrische Ausgangssignal tiefpassgefiltert und dem Vorspannungseingang zugeführt.

In einem weiteren bevorzugten Ausführungsbeispiel ist das erfindungsgemäße System versehen mit einem Strahlteiler, der einen Eingang, einen ersten Ausgang und einen zweiten Ausgang aufweist, mit einem Strahlkombinierer, der einen ersten Eingang, einen zweiten Eingang und einen Ausgang aufweist und mit einer optischen Verzögerungsstrecke, wobei der Strahlteiler dem Eingangssplitter in der Eingangsverbindung nachgeschaltet ist, wobei der erste Ausgang des Strahlteilers mit dem ersten Eingang des Strahlkombinierers verbunden ist, der dem Strahlteiler in der Eingangsverbindung nachgeschaltet ist, und wobei die optische Verzögerungsstrecke den zweiten Ausgang des Strahlteilers mit dem zweiten Eingang des Strahlkombinierers verbindet.

Mithilfe des Strahlteilers kann dann, wenn das Hochfrequenzsignal, das mit dem optischen Signal mit einer Repetitionsrate f_{R} synchronisiert werden soll, eine Frequenz f_{Hf} hat, die ein gradzahliges Vielfaches der Repetitionsrate f_{R} ist, also f_{HF} = 2n·f_{R} gilt, mittels der Verzögerungsstrecke ein weiterer Puls erzeugt werden, der um ein Viertel der Schwingungsdauer von dem eigentlichen Puls des optischen Signals beabstandet ist. Auf diese Weise ist es dann möglich, auch Hochfrequenzsignale, deren Frequenz die zuvor genannte Relation zur Repetitionsrate haben, zu synchronisieren.

In diesem Fall ist es jedoch erforderlich, dass dem ersten Photodetektor ein Bandpassfilter nachgeschaltet ist, dessen Mittenfrequenz das Doppelte der Repetitionsrate des optischen Signals, also 2f_{R}, ist.

Es wird also das elektrische Eingangssignal und das elektrische Ausgangssignal mit einer das Doppelte der Repetitionsrate f_{R} betragenden Mittenfrequenz bandpassgefiltert, wobei ein Teil des optischen Signals vor dem Eingang des elektro-optischen Amplitudenmodulators abgespalten und derart verzögert wird, dass die Verzögerung ein Viertel des Abstands zweier Pulse des optischen Signals beträgt, und wobei das optische Signal und der verzögerte Teil in den Eingang gegeben werden.

Alternativ ist es auch möglich, in dem Fall, dass die Frequenz f_{Hf} des Hochfrequenzsignals ein ungradzahliges Vielfaches der Repetitionsrate f_{R} des optischen Signals ist, also f_{HF} = (2n+1) ·f_{R} gilt, mittels der ersten Verzögerungsstrecke ein Zusatzpuls zu erzeugen, der um die halbe Schwingungsdauer vom Eingangspuls beabstandet ist. Allerdings ist es dann erforderlich, dass ein dem ersten Photodetektor nachgeschalteter Bandpassfilter eine Mittenfrequenz von f_{R} hat.

In diesem Fall werden das elektrische Eingangssignal und das elektrische Ausgangssignal mit einer der Repetitionsrate f_{R} entsprechenden Mittenfrequenz bandpassgefiltert, und ein Teil des optischen Signals wird vor dem Eingang des elektro-optische Amplitudenmodulators abgespalten und derart verzögert, dass die Verzögerung die Hälfte des Abstands zweier Pulse des optischen Signals beträgt. Schließlich werden das optische Signal und der verzögerte Teil in den Eingang gegeben.

In beiden Fällen wird durch die erste Verzögerungsstrecke ermöglicht, dass aufeinanderfolgende optische Pulse immer Nulldurchgänge des Hochfrequenzsignals mit abwechselnd positiver und negativer Steigung abtasten.

Schließlich kann ein erfindungsgemäßes System gemäß einem weiteren bevorzugten Ausführungsbeispiel mit einer ersten Wellenplatte zum Drehen der Polarisationsebene des auf die erste Wellenplatte fallenden optischen Signals ausgestaltet sein, wobei die erste Wellenplatte zwischen dem Eingangssplitter und dem Strahlteiler angeordnet und der Strahlteiler als polarisierender Strahlteiler ausgebildet ist, wobei die erste Wellenplatte eine Stelleinrichtung mit einem Steuersignaleingang zum gesteuerten Einstellen des Drehwinkels der Polarisation aufweist, wobei der elektro-optische Amplitudenmodulator einen invertierten optischen Ausgang aufweist, dessen Ausgangssignal bei einem in den optischen Eingang des Amplitudenmodulators eingehenden optischen Signal gegenüber dem eingehenden Signal um das gleiche Maß aber mit umgekehrtem Vorzeichen geändert ist wie das Ausgangssignal am optischen Ausgang des Amplitudenmodulators, mit einem optischen Koppler mit einem ersten Eingang, einem zweiten Eingang und einem Ausgang, wobei der Ausgang des optischen Kopplers mit dem optischen Eingang des zweiten Photodetektors verbunden ist, wobei der optische Ausgang des Amplitudenmodulators mit dem ersten Eingang des optischen Kopplers verbunden ist, wobei der invertierte optische Ausgang des Amplitudenmodulators über eine zweite optische Verzögerungsstrecke mit dem zweiten Eingang des Kopplers verbunden ist, mit einem Wellenplattenmischer, der einen Hochfrequenzeingang, einen Lokaloszillatoreingang und einen Ausgang aufweist, mit einem Wellenplattenregler, der einen Reglereingang und einen Reglerausgang, der mit dem Steuersignaleingang der Stelleinrichtung der ersten Wellenplatte verbunden ist, aufweist, mit einem Vorspannungsmischer, der einen Hochfrequenzeingang, einen Lokaloszillatoreingang und einen Ausgang aufweist, wobei der Ausgang des ersten Photodetektors mit dem Lokaloszillatoreingang des Vorspannungsmischers und mit dem Lokaloszillatoreingang des Wellenplattenmischers verbunden ist, wobei der Ausgang des zweiten Photodetektors mit dem Hochfrequenzeingang des Vorspannungsmischers verbunden ist, wobei der Ausgang des Vorspannungsmischers mit dem Reglereingang des Vorspannungsreglers verbunden ist, wobei der Ausgang des zweiten Photodetektors mit dem Hochfrequenzeingang des Wellenplattenmischers verbunden ist und wobei der Ausgang des Wellenplattenmischers mit dem Reglereingang des Wellenplattenreglers verbunden ist.

Wenn die Verzögerungsstrecken geeignet eingestellt sind, ermöglicht dieser Aufbau, dass ein Synchronisationsfehler, also eine Verschiebung der Nulldurchgänge des Hochfrequenzsignals zu den optischen Pulsen, eine fehlerhaft am elektro-optischen Amplitudenmodulator eingestellte Vorspannung und eine fehlerhaft eingestellte erste Wellenplatte jeweils eine Schwebung bewirken, die im zweiten Photodetektor erfasst wird, deren Phasenverschiebung und/oder Frequenz aber jeweils unterschiedlich sind. Damit kann zwischen diesen unterschiedlichen Ursachen diskriminiert werden, und es können, wie zuvor beschrieben, Regelkreise aufgebaut werden, die die fehlerhaften Einstellungen getrennt korrigieren.

Wenn also die Lokaloszillatoreingänge des Wellenplattenmischers und des Vorspannungsmischers vorgeschaltete Phasenschieber und Bandpassfilter haben, die geeignet eingestellt sind, kann aufgrund der unterschiedlichen Phasenlage und Frequenz entweder die Vorspannung oder die Einstellung der ersten Wellenplatte oder die Phasenverschiebung zwischen optischem Signal und Hochfrequenzsignal geregelt werden. Außerdem macht man sich hier den zeitlichen Verlauf der Signale zunutze, sodass die jeweilige Schwebung bei einer definierten Phasenlage innerhalb der Periode abgetastet wird, bei der die jeweils andere Schwebung einen Nulldurchgang hat, sodass unabhängig von der Amplitude der anderen Schwebungen nur die Amplitude erfasst wird, deren Größe ein Maß für die Fehleinstellung der Vorspannung, der Wellenplatte bzw. der Phasenlage ist. Das dritte Signal kann aufgrund der abweichenden Frequenz von den jeweils anderen unterschieden werden.

Somit wird bevorzugt in der Weise vorgegangen, dass ein Teil des optischen Signals vor dem Eingang des elektro-optische Amplitudenmodulators abgespalten und verzögert wird und das optische Signal und der verzögerte Teil in den Eingang gegeben werden, wobei das invertierte optische Ausgangssignal gegenüber dem optischen Ausgangssignal verzögert und vor der Konvertierung zum elektrischen Ausgangssignal mit dem optischen Ausgangssignal kombiniert wird, wobei das elektrische Eingangssignal und das elektrische Ausgangssignal derart gemischt werden, dass ein Gleichspannungssignal erzeugt wird, das durch Steuern der Vorspannung für den Vorspannungseingang geregelt wird.

Insbesondere kann die Amplitude des Teils des optischen Signals, der vor dem Eingang des elektro-optische Amplitudenmodulators abgespalten und verzögert wird, gesteuert werden, und das elektrische Eingangssignal und das elektrische Ausgangssignal werden derart gemischt, dass ein Gleichspannungssignal erzeugt wird, das durch Steuern der Amplitude des abgespaltenen Teils des optischen Signals geregelt wird.

In bevorzugter Weise werden also das elektrische Eingangssignal und das elektrische Ausgangssignal mit einer der Repetitionsrate f_{R} entsprechenden Mittenfrequenz bandpassgefiltert und zur Erzeugung des Gleichspannungssignals gemischt, das durch Steuern der Vorspannung für den Vorspannungseingang geregelt wird, wobei das elektrische Eingangssignal und das elektrische Ausgangssignal mit einer das Doppelte der Repetitionsrate f_{R} betragenden Mittenfrequenz bandpassgefiltert und zur Erzeugung des Gleichspannungssignals gemischt werden, das durch Steuern der Amplitude des abgespaltenen Teils des optischen Signals geregelt wird, wobei der abgespaltene Teil gegenüber dem optischen Signal um ein Viertel des zeitlichen Abstands zwischen zwei Pulsen des optischen Signals verzögert in dem Eingang auftrifft und wobei das invertierte optische Ausgangssignal gegenüber dem optischen Ausgangssignal derart verzögert wird, dass die Verzögerung des invertierten optischen Ausgangssignals die Hälfte des zeitlichen Abstands zwischen zwei Pulsen des optischen Signals beträgt.

Alternativ können demnach auch das elektrische Eingangssignal und das elektrische Ausgangssignal mit einer das Doppelte der Repetitionsrate f_{R} betragenden Mittenfrequenz bandpassgefiltert und zur Erzeugung des Gleichspannungssignals gemischt werden, das durch Steuern der Vorspannung für den Vorspannungseingang geregelt wird, wobei das elektrische Eingangssignal und das elektrische Ausgangssignal mit einer der Repetitionsrate f_{R} entsprechenden Mittenfrequenz bandpassgefiltert und zur Erzeugung des Gleichspannungssignals gemischt werden, das durch Steuern der Amplitude des abgespaltenen Teils des optischen Signals geregelt wird, wobei der abgespaltene Teil gegenüber dem optischen Signal um die Hälfte des zeitlichen Abstands zwischen zwei Pulsen des optischen Signals verzögert in dem Eingang auftrifft und wobei das invertierte optische Ausgangssignal gegenüber dem optischen Ausgangssignal derart verzögert wird, dass die Verzögerung des invertierten optischen Ausgangssignals ein Viertel des zeitlichen Abstands zwischen zwei Pulsen des optischen Signals beträgt.

Im Folgenden wird die vorliegende Erfindung anhand einer Zeichnung erläutert, die lediglich bevorzugte Ausführungsbeispiele zeigt, wobei
- Fig. 1: einen Schaltplan einer Hochfrequenzsynchronisationseinrichtung gemäß einem ersten Ausführungsbeispiel der vorliegenden Erfindung zeigt,
- Fig. 2: einen Schaltplan einer optischen Synchronisationseinrichtung gemäß einem Ausführungsbeispiel der vorliegenden Erfindung,
- Fig. 3: Darstellungen des zeitlichen Verlaufs der optischen Signale am zweiten Photodetektor zusammen mit dem zeitlichen Verlauf des Hochfrequenzsignals zeigt,
- Fig. 4: einen Schaltplan einer Hochfrequenzsynchronisationseinrichtung gemäß einem zweiten Ausführungsbeispiel der vorliegenden Erfindung zeigt,
- Fig. 5: Darstellungen des zeitlichen Verlaufs der optischen Signale am zweiten Photodetektor zusammen mit dem zeitlichen Verlauf des Hochfrequenzsignals beim zweiten Ausführungsbeispiel einer Hochfrequenzsynchronisationseinrichtung zeigt,
- Fig. 6: einen Schaltplan einer Hochfrequenzsynchronisationseinrichtung gemäß einem dritten Ausführungsbeispiel der vorliegenden Erfindung zeigt,
- Fig. 7: Darstellungen des zeitlichen Verlaufs der optischen Signale am zweiten Photodetektor zusammen mit dem zeitlichen Verlauf des Hochfrequenzsignals beim dritten Ausführungsbeispiel einer Hochfrequenzsynchronisationseinrichtung zeigt,
- Fig. 8: einen Schaltplan einer Hochfrequenzsynchronisationseinrichtung gemäß einem vierten Ausführungsbeispiel der vorliegenden Erfindung zeigt und
- Fig. 9: Darstellungen des zeitlichen Verlaufs der optischen Signale am zweiten Photodetektor zusammen mit dem zeitlichen Verlauf des Hochfrequenzsignals beim vierten Ausführungsbeispiel einer Hochfrequenzsynchronisationseinrichtung zeigt.

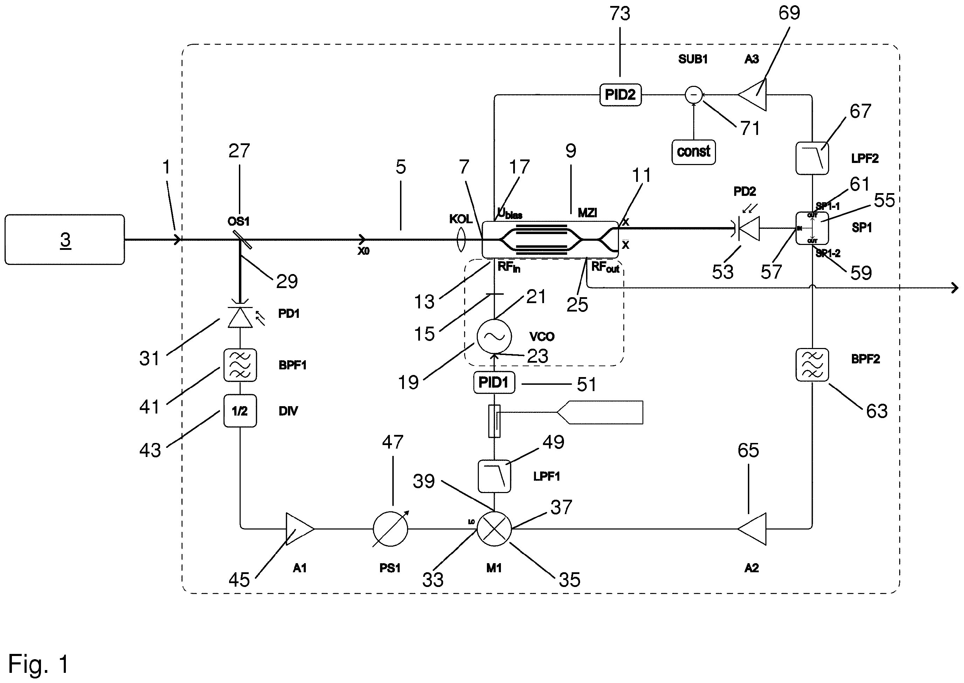

In Fig. 1 ist ein schematischer Schaltplan einer Hochfrequenzsynchronisationseinrichtung dargestellt, wobei in dieser Einrichtung ein System zum Erzeugen eines Synchronisationssignals integriert ist bzw. es wird ein entsprechendes Verfahren ausgeführt, wie sich aus der folgenden Beschreibung ergeben wird.

Außerdem wird damit ein Verfahren zum Synchronisieren eines Hochfrequenzoszillators mit einem gepulstem optischen Signal ausführt.

Die Hochfrequenzsynchronisationseinrichtung gemäß dem ersten Ausführungsbeispiel weist einen Eingang 1 für das mit einer Repetitionsrate f_{R} gepulste optische Signal auf, das in einer Referenzquelle 3 erzeugt wird, wobei es sich hier vorzugsweise um einen Erbium-dotierten Faserlaser handelt. Die Referenzquelle 3 ist mit dem Eingang 1 verbunden, von dem sich wiederum eine optische Eingangsverbindung 5 erstreckt, deren von dem Eingang 1 entferntes Ende mit dem optischen Eingang 7 eines elektro-optischen Amplitudenmodulators 9 verbunden ist, der vorzugsweise als Mach-Zehnder-Modulator ausgestaltet ist.

Unter einem elektro-optischen Amplitudenmodulator 9 im Sinne der vorliegenden Erfindung wird ein elektro-optisches Bauteil verstanden, bei dem ein eingehender optischer Puls dann in seiner Amplitude moduliert wird, wenn zum Zeitpunkt des Auftreffens des optischen Pulses auf den Modulator 9 eine Spannung an dem Phasenglied des Modulators anliegt, sodass am optischen Ausgang 11 des Modulators 9 der Puls zeitlich unverzögert, aber mit modulierter Amplitude ausgegeben wird.

Dazu weist der elektro-optische Amplitudenmodulator 9 im Sinne der vorliegenden Erfindung einen Spannungseingang 13 auf, der mit dem Hochfrequenzsignaleingang 15 des Systems zum Erzeugen eines Synchronisationssteuersignals verbunden ist. Der Spannungseingang 13 ist wiederum mit dem Phasenglied im Inneren des elektro-optische Amplitudenmodulators 9 verbunden. Außerdem weist der Amplitudenmodulator 9 einen mit dem Spannungseingang 13 verbundenen Vorspannungseingang 17 auf, an den eine Gleichspannung angelegt werden kann, sodass eine von der an dem Spannungseingang 13 anliegenden Spannung unabhängige Modulation des eingehenden optischen Signals erreicht werden kann.

Somit kann über den Vorspannungseingang 17 die Amplitude des am optischen Ausgang 11 ausgegebenen unmodulierten Signals eingestellt werden.

Außerdem weist die Hochfrequenzsynchronisationseinrichtung einen Hochfrequenzoszillator 19 auf, der einen Hochfrequenzausgang 21 umfasst, der wiederum mit dem Hochfrequenzsignaleingang 15 verbunden ist. Außerdem weist der Hochfrequenzoszillator 19 einen Steuereingang 23 auf, bei dem durch ein Gleichspannungssignal die Frequenz des von dem Oszillator 19 ausgegebenen Hochfrequenzsignals vorgegeben werden kann, was eine Anpassung der Phasenlage durch kurzzeitiges Anheben oder Absenken der Frequenz erlaubt. Schließlich ist in dem elektro-optischen Amplitudenmodulator 9 noch ein Ausgang 25 vorgesehen, an dem das an dem Spannungseingang 13 eingekoppelte Hochfrequenzsignal unverändert wieder ausgegeben wird.

In der optischen Eingangsverbindung 5 ist ein Eingangssplitter 27 vorgesehen, der das einfallende gepulste optische Signal einerseits entlang der optischen Eingangsverbindung 5 weiterleitet und andererseits einen Teil des gepulsten Signals an einem Abzweig 29 ausgibt. Der Abzweig 29 ist mit dem optischen Eingang eines ersten Photodetektors 31 verbunden, der das gepulste optische Signal in ein elektrisches Signal mit der Frequenz f_{R} umwandelt und an dessen Ausgang ausgibt. Es wird also ein Teils des optischen Signals vor dem Eingang 7 abgespalten und in ein elektrisches Eingangssignal konvertiert. Der Ausgang des ersten Photodetektors 31 ist mit dem Lokaloszillatoreingang 33 eines Phasenverschiebungsmischers 35 verbunden, der neben dem Lokaloszillatoreingang 33 einen Hochfrequenzeingang 37 und einen Ausgang 39 aufweist. Bei dem Phasenverschiebungsmischer 35 handelt es sich um einen herkömmlichen, aus dem Bereich der Analogelektronik bekannten Mischer. Zwischen dem Ausgang des ersten Photodetektors 31 und dem Lokaloszillatoreingang 33 des Phasenverschiebungsmischers 35 sind der Reihe nach ein Bandpassfilter 41, ein Frequenzteiler 43, ein Verstärker 45 und ein Phasenschieber 47 vorgesehen, sodass das von dem ersten Photodetektor 31 ausgegebene elektrische Eingangssignal zunächst in dem Bandpassfilter 41, dessen Mittenfrequenz der Repetitionsrate f_{R} der Referenzquelle 3 entspricht, gefiltert und anschließend mit Hilfe des Frequenzteilers 43 in der Frequenz halbiert wird. Dieses Signal wird dann mittels des Verstärkers 45 verstärkt, gegebenenfalls mittels des Phasenverschiebers 47 in seiner Phasenlage beeinflusst und in den Lokaloszillatoreingang 33 des Phasenverschiebungsmischers 35 gegeben. Der Ausgang 39 des Phasenverschiebungsmischers 35 ist mit einem Tiefpassfilter 49 verbunden, dessen Ausgang wiederum mit dem Reglereingang eines Phasenverschiebungsreglers 51 verbunden ist. Der Reglerausgang des Phasenverschiebungsreglers 51 ist mit dem Steuereingang 23 des Hochfrequenzoszillators 19 gekoppelt, sodass der Phasenverschiebungsregler 51 über die Frequenz die Phasenlage des von dem Hochfrequenzoszillator 19 erzeugten Hochfrequenzsignals steuern kann.

Der optische Ausgang 11 des elektro-optischen Amplitudenmodulators 9 ist mit dem optischen Eingang eines zweiten Photodetektors 53 verbunden, der das ggf. von dem Amplitudenmodulator 9 modulierte Pulssignal in ein elektrisches Ausgangssignal umwandelt. Dem zweiten Photodetektor 53 ist ein erster Leistungsteiler 55 nachgeschaltet, der einen Eingang 57 sowie einen ersten Ausgang 59 und einen zweiten Ausgang 61 aufweist. Der erste Ausgang 59 ist über einen Bandpassfilter 63 und einen Verstärker 65 mit dem Hochfrequenzeingang 37 des Phasenverschiebungsmischers 35 verbunden, wobei die Mittenfrequenz des Bandpassfilters 63 die Hälfte der Repetitionsrate des gepulsten Referenzsignals ist, also f_{R}/2.

Auf diese Weise werden in dem Phasenverschiebungsmischer 35 zwei elektrische Signale gemischt, deren Frequenz jeweils f_{R}/2 ist, sodass das an den Ausgang 39 des Phasenverschiebungsmischers 35 ausgegebene Signal proportional ist zu der Amplitude der Schwebung, die auf die optische Pulse in dem elektro-optischen Amplitudenmodulator 9 aufmoduliert wird.

Der zweite Ausgang 61 des ersten Leistungsteilers 55 ist über einen Tiefpassfilter 67, einen Verstärker 69 und ein Subtraktionsglied 71 mit einem Vorspannungsregler 73 verbunden, dessen Reglerausgang mit dem Vorspannungseingang 17 des elektro-optischen Amplitudenmodulators verbunden ist. Dadurch ist es möglich, dass das am optischen Ausgang 11 des Amplitudenmodulators 9 ausgegebene Signal zunächst mit Hilfe des Tiefpassfilters 67 gemittelt und dann dazu verwendet wird, die Vorspannung zu regeln, sodass das am optischen Ausgang 11 ausgegebene optische Ausgangssignal möglichst konstant ist.

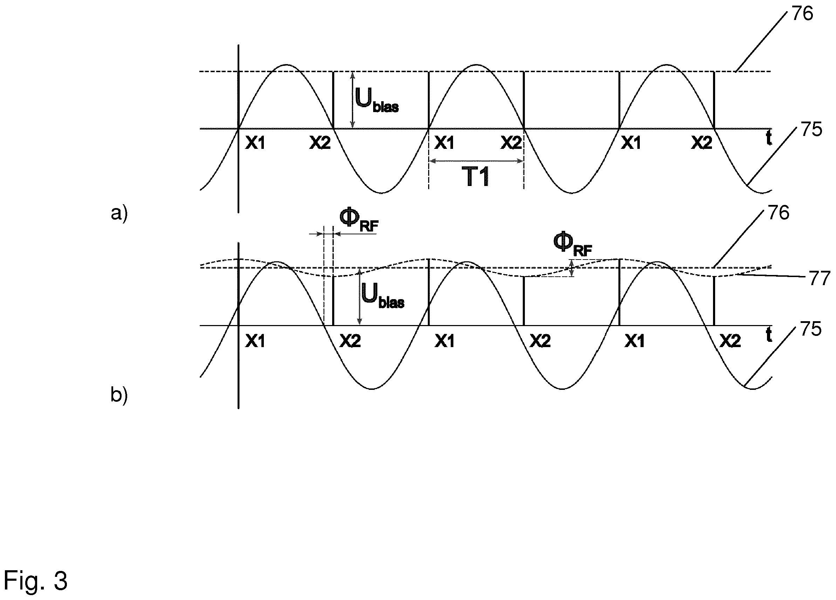

Die Funktionsweise des in Fig. 1 dargestellten Systems geht aus Fig. 3 hervor, wobei zugrunde gelegt wird, dass die Frequenz f_{HF} des Hochfrequenzoszillators 19 ein halbzahliges Vielfaches der Repetitionsrate f_{R} ist, mit der die optischen Pulse von der Referenzquelle 3 emittiert werden, also f_{HF} = (n+1/2)·f_{R} gilt.

In dem Teil A von Fig. 3 gezeigten Fall, in dem das Hochfrequenzsignal 75 des Hochfrequenzoszillators 19 in Phase mit den Pulsen X1, X2 des optischen Referenzsignals ist, fallen immer Nulldurchgänge des Hochfrequenzsignals 75 mit den Pulsen X1, X2 im elektro-optischen Amplitudenmodulator 9 zusammen, sodass die Amplitude der optischen Pulse (X1, X2) nicht moduliert wird. Damit wird am zweiten Photodetektor 53 lediglich ein konstantes Signal 76 erzeugt. Damit ist auch die Amplitude des Signals, das den Tiefpassfilter 49 hinter den Phasenverschiebungsmischer 35 verlässt, Null und die Phasenlage des von dem Hochfrequenzoszillator 19 erzeugten Hochfrequenzsignals bleibt unverändert.

Wenn jedoch, wie dies in Teil B von Fig. 3 dargestellt ist, das Hochfrequenzsignal 75 um den Betrag Φ_{RF} gegenüber den Pulsen X1, X2 des optischen Referenzsignals phasenverschoben ist, werden die Pulse in ihrer Amplitude moduliert, und es wird eine Schwebung 77 erzeugt, deren Frequenz f_{R}/2 ist. Diese Schwebung mit der Frequenz f_{R}/2 wird als elektrisches Ausgangssignal von dem zweiten Photodetektor 53 ausgegeben und somit dem Phasenverschiebungsmischer 35 am Hochfrequenzeingang 37 zugeführt. Das den Tiefpassfilter 49 verlassende Signal ist somit proportional zu der Phasenverschiebung Φ_{RF}, und der Reglereingang des Phasenverschiebungsreglers 51 erhält ein entsprechendes Signal, sodass der Hochfrequenzoszillator 19 entsprechend geregelt wird.

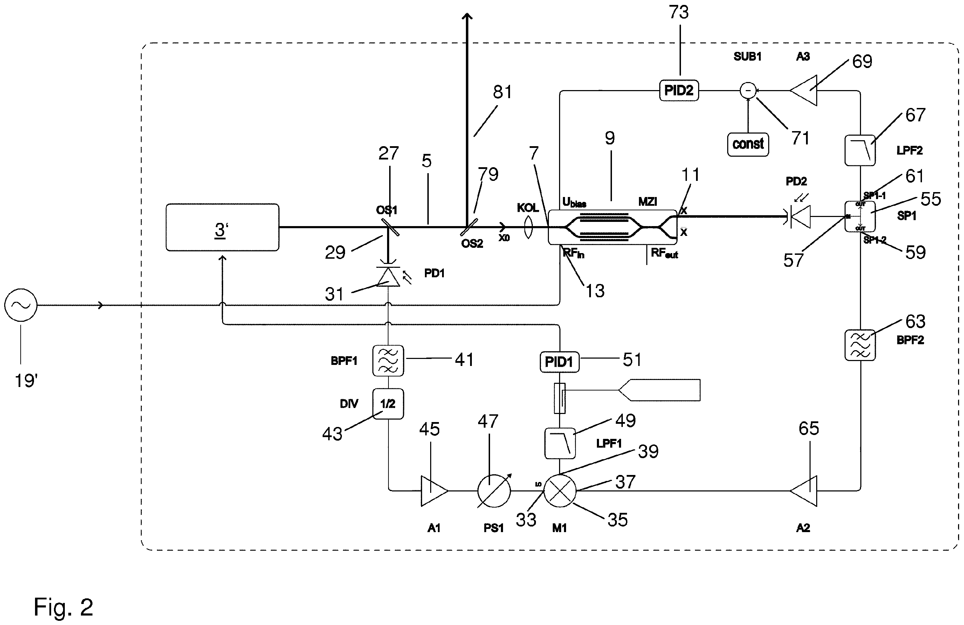

Das System zum Erzeugen eines Synchronisationssteuersignals umfasst bei diesem zuvor beschriebenen Ausführungsbeispiel somit den gesamten Aufbau mit Ausnahme der Referenzquelle 3 und dem Hochfrequenzoszillator 19. Ein solches System kann im Unterschied zu der in Fig. 1 gezeigten Hochfrequenzsynchronisationseinrichtung auch dazu verwendet werden, statt eines Hochfrequenzoszillators die Phasenlage des von einer Referenzquelle 3' ausgegebenen optischen Referenzsignals zu steuern, wie dies in Fig. 2 dargestellt ist.

Abweichend von dem Schaltplan aus Fig. 1 ist hier folgender Unterschied gegeben. Der Reglerausgang des Phasenverschiebungsreglers 51 ist im vorliegenden Fall nicht mit einem Steuereingang einer Hochfrequenzquelle verbunden, sondern mit einem Steuereingang der optischen Referenzquelle 3'. Außerdem wird das Ausgangssignal der Hochfrequenzquelle 19' unmittelbar in den Spannungseingang 13 des elektro-optischen Modulators 9 gegeben, und in der optischen Eingangsverbindung 5 ist ein zweiter Splitter 79 dem Eingangssplitter 27 nachgeschaltet. An dem Abzweig 81 des zweiten Splitters 79 wird dann das synchronisierte gepulste optische Signal ausgegeben.

Somit wird bei der in Fig. 2 insgesamt dargestellten Synchronisationseinrichtung die Phasenlage des von der optischen Referenzquelle 3' ausgegebenen gepulsten Signals geregelt. Die Funktionsweise ist aber identisch zu der im Zusammenhang mit Fig. 1 beschriebenen.

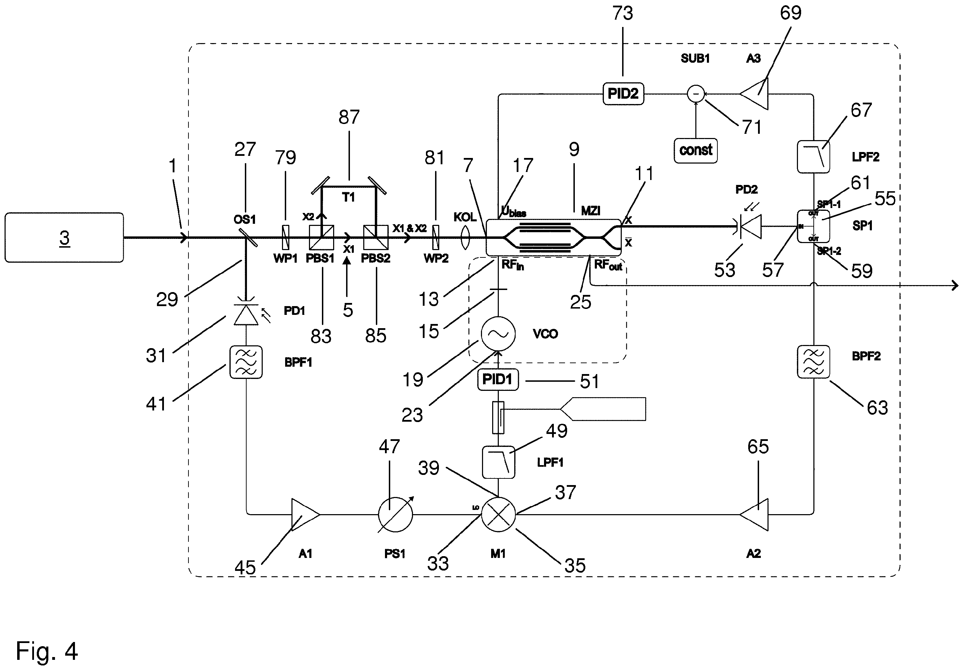

In Fig. 4 ist der schematische Schaltplan des zweiten Ausführungsbeispiels einer Hochfrequenzsynchronisationseinrichtung dargestellt, die sich von dem in Fig. 1 gezeigten ersten Ausführungsbeispiel zum einen dadurch unterscheidet, dass in der Verbindung zwischen dem Ausgang des ersten Photodetektors 31 und dem Lokaloszillatoreingang 33 des Phasenverschiebungsmischers 35 kein Frequenzteiler mehr angeordnet ist. Daneben sind in der optischen Eingangsverbindung 5 eine erste Wellenplatte 79 und eine zweite Wellenplatte 81 vorgesehen, zwischen denen hintereinander ein polarisierender Strahlteiler 83 sowie ein polarisierender Strahlkombinierer 85 vorgesehen sind, wobei ein erster Ausgang des polarisierenden Strahlteilers unmittelbar mit dem ersten Eingang des Strahlkombinierers 85 verbunden ist, während ein zweiter Ausgang des Strahlteilers 83 über eine optische Verzögerungsstrecke 87 mit dem Strahlkombinierer 85 verbunden ist.

Die Länge der optischen Verzögerungsstrecke 87 hängt davon ab, ob die Frequenz f_{R} des von dem Hochfrequenzoszillator 19 erzeugten Hochfrequenzsignals ein ungradzahliges oder gradzahliges Vielfaches der Repetitionsrate f_{R} ist, mit der die optischen Pulse von der Referenzquelle 3 emittiert werden.

Wenn die Frequenz f_{HF} des Hochfrequenzsignals ein ungradzahliges Vielfaches der Repetitionsrate f_{R} ist, also f_{HF} = (2n+1) ·f_{R} gilt, ist die Länge der optischen Verzögerungsstrecke 87 derart bemessen, dass der im Strahlteiler 83 erzeugte abgespaltene Puls, der durch die optische Verzögerungsstrecke 87 läuft, mit einer Verzögerung im Strahlkombinierer 85 ankommt, die dem halben zeitlichen Abstand zwischen zwei von der Referenzquelle 3 emittierten Pulsen entspricht. In diesem Fall ergibt sich wiederum das in Fig. 3 dargestellte Verhältnis zwischen dem Hochfrequenzsignal 75 einerseits und den Pulsen X1, X2, die am optischen Ausgang 11 aus dem elektro-optischen Amplitudenmodulator 9 austreten, wobei mit X1 der nicht verzögerte Puls bezeichnet ist und mit X2 der durch die Verzögerungsstrecke 87 Verzögerte. In diesem Fall ergibt sich, da in dem Modulator 9 Pulse X1, X2 mit der doppelten Frequenz der Referenzquelle auftreffen, eine Schwebung 77 mit der Frequenz f_{R}, wenn, wie in Teil B von Fig. 3 gezeigt, eine Phasenverschiebung Φ_{RF} vorliegt. Aus diesem Grund sind die Bandpassfilter 41, 63 beim zweiten Ausführungsbeispiel derart ausgebildet, dass die Mittenfrequenz f_{R} ist, sodass entsprechende Signale im Phasenverschiebungsmischer 35 zur Wechselwirkung gebracht bzw. gemischt werden, wobei auch hier wieder das am Ausgang 39 des Phasenverschiebungsmischers 35 bzw. hinter dem Tiefpassfilter 49 auftretende Gleichspannungssignal ein Maß für die Amplitude dieser Schwebung ist, wobei diese Amplitude wieder direkt proportional zur Phasenverschiebung Φ_{RF} ist.

Beim zweiten Ausführungsbeispiel wird also durch die optische Verzögerungsstrecke 87 ermöglicht, dass auch in diesem Fall die optischen Pulse, die aufeinanderfolgen, jeweils Nulldurchgänge mit abwechselnder Steigung abtasten.

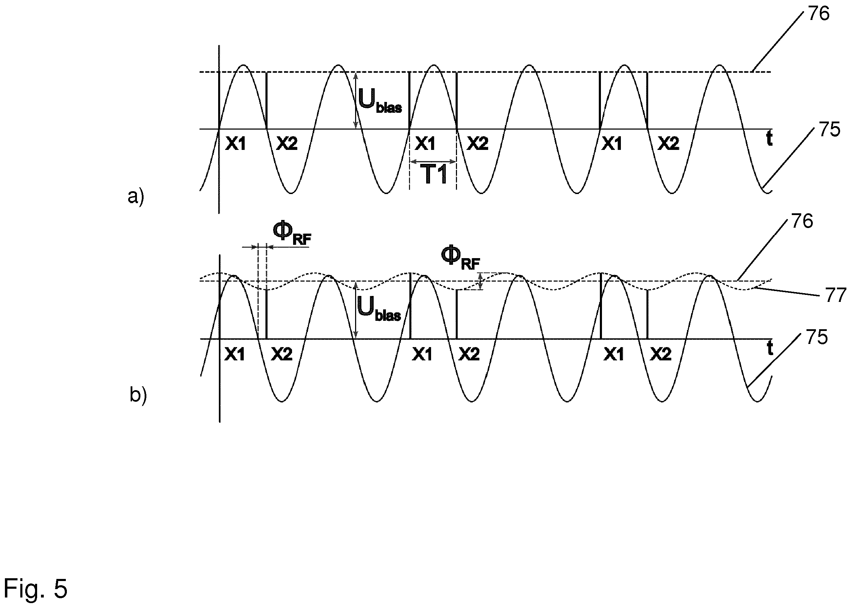

In dem Fall, dass die Frequenz f_{HF} des Hochfrequenzsignals, das von dem Hochfrequenzoszillator 19 erzeugt wird, ein gradzahliges Vielfaches der Repetitionsrate f_{R} der Referenzquelle 3 ist, also f_{Hf} = 2n·f_{R} gilt, ist die optische Verzögerungsstrecke 87 derart bemessen, dass die Verzögerung, mit der der durch die Verzögerungsstrecke 87 laufende Puls am Strahlkombinierer 85 ankommt, ein Viertel des zeitlichen Abstandes zwischen zwei Pulsen ist. Das sich daraus ergebende Resultat am zweiten Photodetektor 53 ist in Fig. 5 dargestellt, wobei Teil A wiederum den Fall zeigt, dass das Hochfrequenzsignal 75 in Phase mit den Pulsen X1, X2, die am Eingang 7 des elektro-optischen Amplitudenmodulators 9 auftreffen, ist. In Teil B ist der Fall gezeigt, wo eine Phasenverschiebung vorliegt, was dann zu einer Schwebung 77 führt, deren Frequenz 2f_{R} ist (Dies ist im Teil B daran zu erkennen, dass zwei Schwingungen der Schwebung 77 zwischen zwei ursprünglichen Pulsen X1 liegen).

Daher sind dann, wenn das Hochfrequenzsignal eine Frequenz f_{Hf} hat, die ein gradzahliges Vielfaches der Repetitionsrate f_{R} ist, die Bandpassfilter 41, 63 derart gewählt, dass die Mittenfrequenz 2f_{R} ist. Dann ergibt sich wiederum am Reglereingang des Phasenverschiebungsreglers 51 eine Gleichspannung, die proportional zur Phasenverschiebung Φ_{RF} ist, sodass der Hochfrequenzoszillator 19 entsprechend durch den Phasenverschiebungsregler 51 geregelt werden kann.

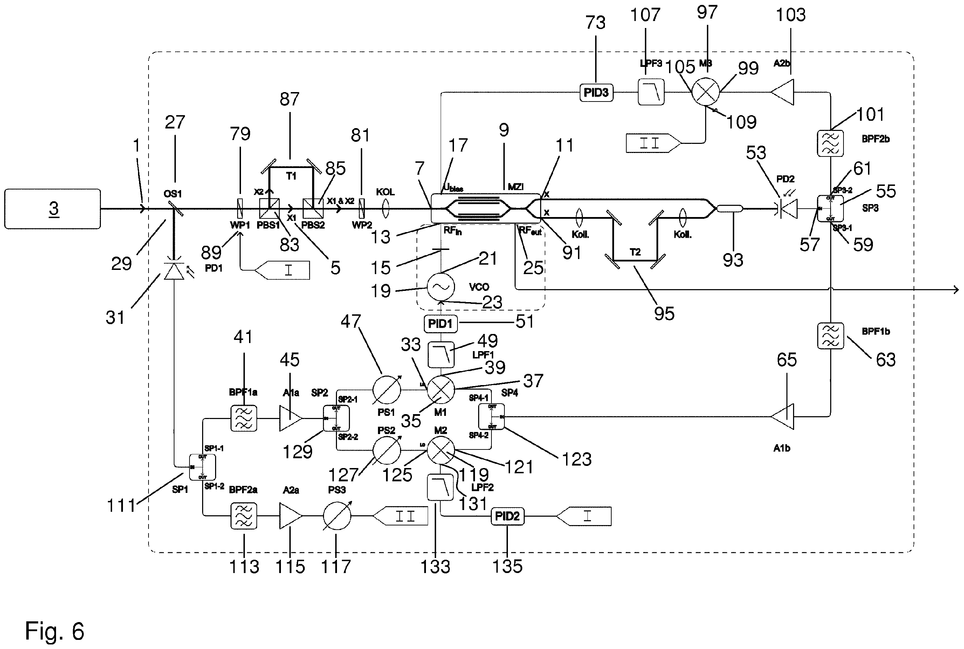

In Fig. 6 ist ein drittes Ausführungsbeispiel einer erfindungsgemäßen Hochfrequenzsynchronisationseinrichtung dargestellt, wobei dieses sich von den zuvor beschriebenen Ausführungsbeispielen zunächst dadurch unterscheidet, dass die erste Wellenplatte 79 eine Stelleinrichtung zum gesteuerten Einstellen des Drehwinkels der Polarisation aufweist, wobei die Stelleinrichtung einen Steuersignaleingang 89 aufweist. Somit kann die Amplitude des Teils des optischen Signals, der vor dem Eingang 7 abgespalten und verzögert wird, gesteuert werden.

Darüber hinaus ist an dem elektro-optischen Amplitudenmodulator 9 ein invertierter optischer Ausgang 91 vorgesehen, dessen Ausgangssignal bei einem in den optischen Eingang 7 des Amplitudenmodulators 9 eingehenden optischen Signals gegenüber dem eingehenden Signal um das gleiche Maß, aber mit umgekehrten Vorzeichen geändert ist wie das Ausgangssignal am optischen Ausgang 11. Außerdem ist dem optischen Eingang des zweiten Photodetektors 53 ein optischer Koppler 93 vorgeschaltet, wobei der optische Ausgang 11 direkt mit dem Eingang des Kopplers 93 verbunden ist, während der invertierte optische Ausgang 91 des Amplitudenmodulators 9 über eine zweite optische Verzögerungsstrecke 95 mit dem Koppler 93 verbunden ist.

Des Weiteren ist am zweiten Ausgang 61 des ersten Leistungsteilers ein Vorspannungsmischer 97 derart angeschlossen, dass dessen Hochfrequenzeingang 99 mit dem zweiten Ausgang 61 über einen Bandpassfilter 101 und einen Verstärker 103 gekoppelt ist. Somit ist ein Ausgang des ersten Leistungsteilers 55 mit dem Hochfrequenzeingang 99 des Vorspannungsmischers 97 verbunden. Der Ausgang 105 des Vorspannungsmischers 97 ist dann über einen Tiefpassfilter 107 wiederum mit dem Vorspannungsregler 73 verbunden, dessen Reglerausgang mit dem Vorspannungseingang 17 gekoppelt ist. Der Lokaloszillatoreingang 109 des Vorspannungsmischers 97 ist über einen Leistungsteiler 111, einen Bandpassfilter 113, einen Verstärker 115 und einen Phasenschieber 117 mit dem optischen Ausgang des ersten Photodetektors 31 verbunden.

Schließlich ist ein Wellenplattenmischer 119 vorgesehen, dessen Hochfrequenzeingang 121 über einen Leistungsteiler 123, den Verstärker 65 und den Bandpassfilter 63 mit dem ersten Ausgang 59 des ersten Leistungsteilers 55 verbunden ist. Der Lokaloszillatoreingang 125 des Wellenplattenmischers 119 ist über einen Phasenschieber 127, einen Leistungsteiler 129, den Verstärker 45, den Bandpassfilter 41 und den Leistungsteiler 111 mit dem optischen Ausgang des ersten Photodetektors 31 verbunden. Der Ausgang 131 des Wellenplattenmischers 119 ist schließlich über einen Tiefpassfilter 133 mit einem Wellenplattenregler 135 verbunden, dessen Reglerausgang mit dem Steuersignaleingang 89 der Stelleinrichtung für die erste Wellenplatte 79 verbunden ist.

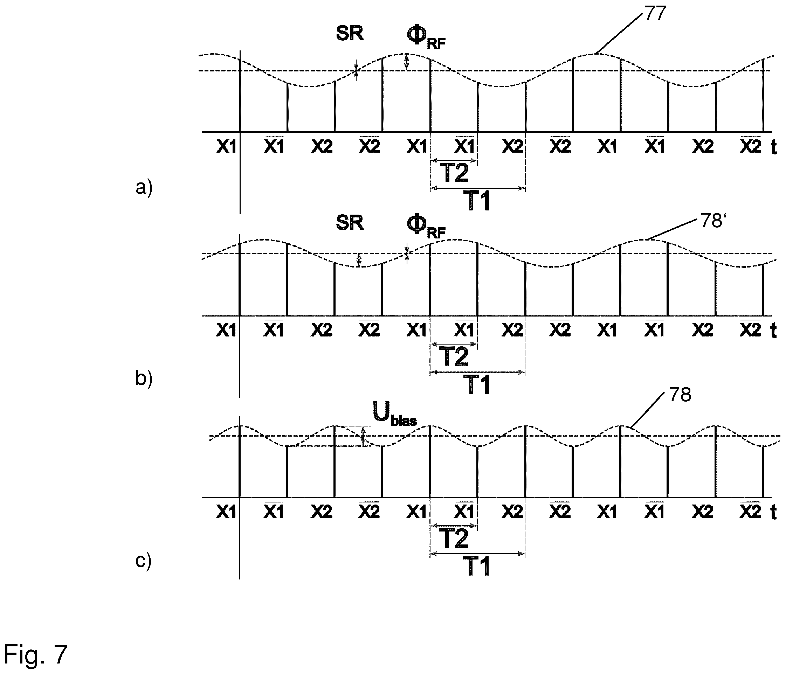

Dieses zuvor in Bezug auf Fig. 6 beschriebene dritte Ausführungsbeispiel ist für den Fall vorgesehen, dass die Frequenz f_{Hf} des Hochfrequenzsignals ein ungradzahliges Vielfaches der Repetitionsrate f_{R} der Referenzquelle 3 ist, also f_{HF} = (2n+1)·f_{R} gilt. In diesem Fall ist die Länge der zweiten optischen Verzögerungsstrecke 95 zwischen dem invertierten optischen Ausgang 91 und dem Koppler 93 derart bemessen, dass ein entlang dieses Pfades laufender optischer Puls gegenüber dem Puls, der zwischen dem optischen Ausgang 11 und dem Koppler 93 läuft, um ein Viertel des zeitlichen Abstandes zwischen zwei Pulsen der Referenzquelle 3 verzögert wird. Damit ergeben sich am optischen Eingang des zweiten Photodetektors 53 pro erzeugtem Puls X1 in der Referenzquelle 3 drei weitere Pulse X2 (aufgrund der ersten optischen Verzögerungstrecke 87) sowie ***̅X̅*̅1̅** und ***̅X̅*̅2̅** (aufgrund der zweiten optischen Verzögerungsstrecke 95), die dort auftreffen, wobei sich, wie Teil A von Fig. 7 zeigt, dann, wenn eine Phasenverschiebung zwischen gepulsten Referenzsignal und Hochfrequenzsignal vorliegt, eine Schwebung 77 mit der Frequenz f_{R} und einer Phasenverschiebung von -45° ergibt. Im Teil B von Fig. 7 ist gezeigt, dass eine ungleiche Aufteilung der Amplitude der Pulse, die entlang der ersten optischen Verzögerungsstrecke 87 laufen, und denen, die direkt zum Stahlkombinierer 85 laufen, also X1 und X2, zu einer Schwebung 78' mit einer Phasenverschiebung von +45° und einer Frequenz von f_{R} führen. Dies bedeutet, dass die Schwebungen 77, 78' zwar die gleiche Frequenz haben, aber um 90° zueinander phasenverschoben sind.

Schließlich ist in Teil C von Fig. 7 zu erkennen, dass bei einer falsch eingestellten Vorspannung am Vorspannungseingang 17 des elektro-optischen Amplitudenmodulators 9 eine Schwebung 78 mit einer Frequenz von 2f_{R} erzeugt wird.

Somit ist es möglich, durch Abtasten der Schwebungen 77, 78' bei unterschiedlichen Phasenlagen entweder den Umfang der Phasenverschiebung Φ_{RF} oder die Fehlausrichtung der Wellenplatten (SR) zu messen, wobei die Messung des einen jeweils im Bereich eines Nulldurchgangs des anderen erfolgt, sodass beide Messungen unabhängig voneinander erfolgen können. Hierbei wird gerade ausgenutzt, dass die Schwebungen 77, 78' um 90° gegeneinander phasenverschoben sind.

Im Hinblick auf die Messung einer falschen Vorspannung, bei der die damit verbundene Schwebung 78 die Frequenz 2f_{R} hat, muss ein anderer Bandpassfilter verwendet werden. Dementsprechend ist das Ausführungsbeispiel gemäß Fig. 6 ausgestaltet, wobei die Signale, die zu den Lokaloszillatoreingang 109 bzw. zum Hochfrequenzeingang 99 des Vorspannungsmischers 97 führen, derart gefiltert sind, dass dort jeweils diese Signale mit einer Frequenz 2f_{R} ankommen und das Gleichspannungssignal hinter dem Tiefpassfilter 107 dann ein Maß für die Fehleinstellung der Vorspannung ist, sodass der Vorspannungsregler 73 entsprechend arbeiten kann.

In analoger Weise werden dem Hochfrequenzeingang 121 und dem Lokaloszillatoreingang 125 des Wellenplattenmischers 119 jeweils ein elektrisches Eingangssignal und ein elektrisches Ausgangssignal mit der Frequenz f_{R} zugeführt, wobei sowohl beim Wellenplattenmischer 119 als auch beim Vorspannungsmischer 97 die Phasenschieber derart eingestellt sind, dass die jeweilige Schwebung 77, 78, 78' bei der richtigen Phasenlage abgetastet wird (siehe Fig. 7).

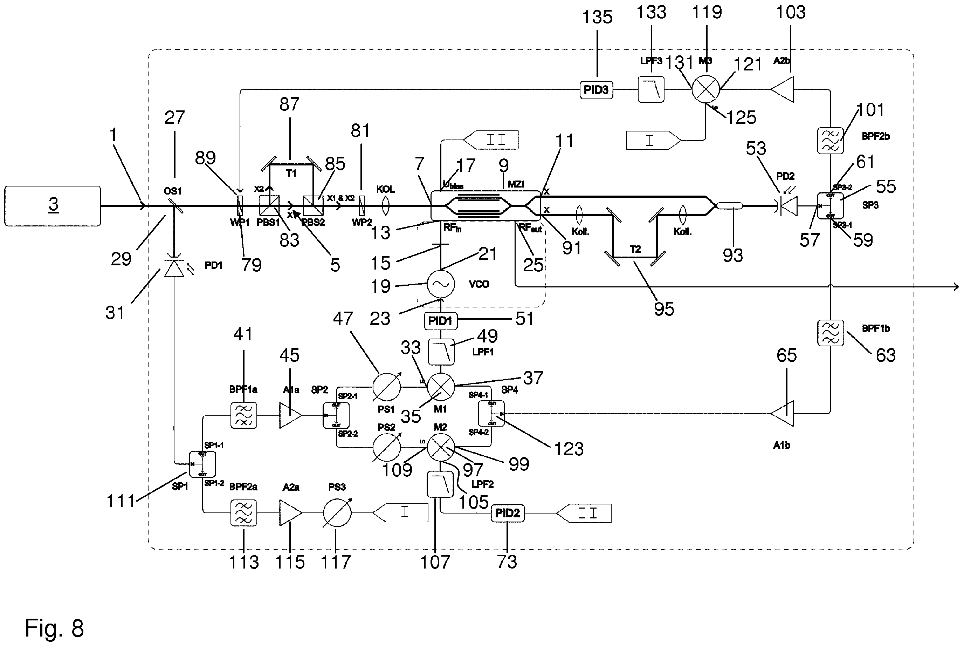

Das vierte Ausführungsbeispiel einer erfindungsgemäßen Hochfrequenzsynchronisationseinrichtung, das in Fig. 8 gezeigt ist, arbeitet nach dem gleichen Prinzip, wie das im Zusammenhang mit Fig. 6 beschriebene, wobei auch hier zwischen dem invertierten optischen Ausgang 91 des elektro-optischen Amplitudenmodulators 9 und dem optischen Koppler 93 eine zweite optische Verzögerungsstrecke 95 vorgesehen ist, deren Länge im vorliegenden Fall allerdings derart bemessen ist, dass ein dort entlang laufender Puls gegenüber einem solchen, der zwischen dem optischen Ausgang 11 und dem Koppler 93 läuft, um den halben zeitlichen Abstand zwischen zwei von der Referenzquelle emittierten Pulsen verzögert wird.

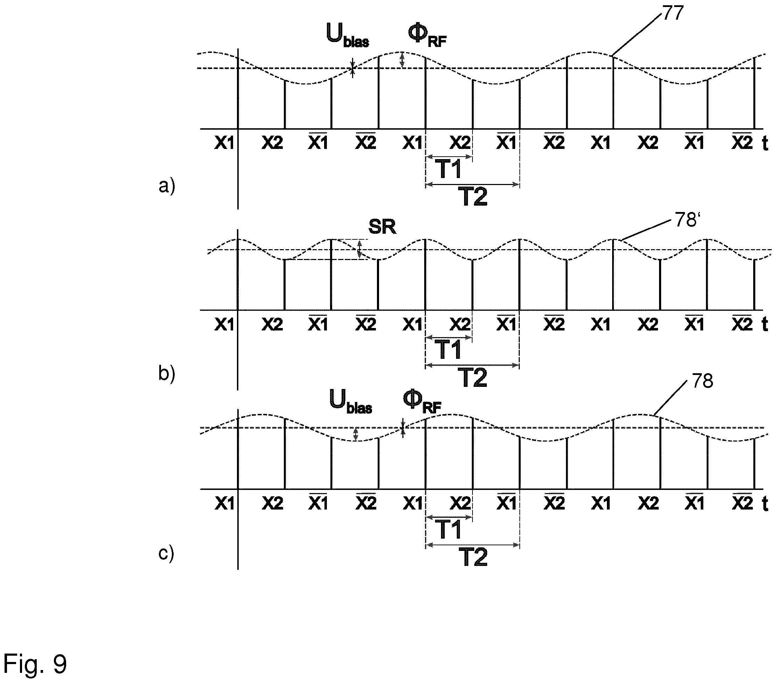

Damit ergibt sich das in Fig. 9 dargestellte Bild für die am optischen Eingang des zweiten Photodetektors 53 auftreffenden Pulse. Im Teil A von Fig. 9 ist gezeigt, dass die Schwebung 77, die sich bei einer Phasenverschiebung zwischen Referenzsignal und Hochfrequenzsignal des Hochfrequenzoszillators 19 ergibt, eine Frequenz f_{R} und eine Phasenverschiebung von -45° hat, während eine Schwebung 78', die aufgrund einer Fehleinstellung der erste Wellenplatte 79 zustande kommt, eine Frequenz von 2f_{R} und eine Phasenverschiebung von 0° hat (Teil B in Fig. 9). Schließlich zeigt sich, dass bei einer falsch gewählten Vorspannung am Vorspannungseingang 17 des elektro-optischen Amplitudenmodulators 9 sich eine Schwebung 78 mit einer Frequenz f_{R} und einer Phasenverschiebung von +45° ergibt (Teil C in Fig. 9).

Somit kann auch in diesem Fall durch geeignete Wahl der Abtastpunkte und der Filter diskriminiert werden zwischen Schwebungen die durch falsche Phasenlage des Hochfrequenzsignals, durch Fehleinstellung der ersten Wellenplatte 79 oder durch eine falsch gewählte Vorspannung am Vorspannungseingang 17 zustande kommen. Hierbei wird analog zu Fig. 7 die von den anderen abweichende Frequenz der einen Schwebung 78' bzw. die Phasenverschiebung von 90° zwischen den Schwebungen 77, 78 mit gleicher Frequenz ausgenutzt. Dementsprechend ist der Wellenplattenmischer 119 über seinen Hochfrequenzeingang 121 mit dem zweiten Ausgang 61 des ersten Leistungsteilers 55 verbunden, wobei der Bandpassfilter 101 dazwischen eine Mittenfrequenz von 2f_{R} hat. Der Lokaloszillatoreingang 125 des Wellenplattenmischers 119 ist über den Bandpassfilter 113 und den Leistungsteiler 111 mit dem ersten Photodetektor 31 gekoppelt. Daneben sind sowohl der Vorspannungsmischer 97 als auch der Phasenverschiebungsmischer 35 mit deren Hochfrequenzeingängen 37, 99 mit dem ersten Ausgang 59 des ersten Leistungsteilers 55 verbunden, sodass diese beide aufgrund des Bandpassfilters 63, dessen Mittenfrequenz f_{R} ist, die gleiche Frequenz am Hochfrequenzeingang "sehen". Dann können wieder die entsprechenden Regler 51, 73 und 135 die Vorspannung und die Stellung der ersten Wellenplatte 89 entsprechend regeln.

Wie sich aus der Beschreibung der Ausführungsbeispiele ergibt, wird durch das erfindungsgemäße System ein einfach aufgebautes System bzw. ein einfaches Verfahren bereitgestellt, die zuverlässig die Phasenlage des Hochspannungssignals relativ zu den Pulsen des optischen Signals erfassen und ein entsprechendes Steuersignal bereitstellen, mit dem die Phasenlage korrigiert werden kann. Außerdem wird ermöglicht, Fehleinstellungen, die sich auch während des Betriebs des Systems ergeben können, selbsttätig zu korrigieren.

## Patentansprüche

1. System zum Erzeugen eines Synchronisationssteuersignals, um ein Hochfrequenzsignal mit einer Frequenz f_{Hf} und ein gepulstes optisches Signal zu synchronisieren,
mit einem Hochfrequenzsignaleingang (15) für das Hochfrequenzsignal,
mit einem Eingang (1) für das mit einer Repetitionsrate f_{R} gepulste optische Signal,
mit einem elektro-optischen Amplitudenmodulator (9), der einen optischen Eingang (7), einen Spannungseingang (13), der mit einem Phasenglied des Amplitudenmodulators (9) verbunden ist, und einen optischen Ausgang (11) aufweist,
mit einem Phasenverschiebungsregler (51), der einen Reglereingang und einen Reglerausgang, an dem das Synchronisationssteuersignal ausgegeben wird, aufweist,
mit einem Phasenverschiebungsmischer (35), der einen Hochfrequenzeingang (37), einen Lokaloszillatoreingang (33) und einen Ausgang (39) aufweist,
mit einem ersten und einem zweiten Photodetektor (31, 53), die einen optischen Eingang und einen Ausgang aufweisen,
mit einer optischen Eingangsverbindung (5), die den Eingang (1) für das optische Signal mit dem optischen Eingang (7) des elektro-optischen Amplitudenmodulators (9) verbindet, und
mit einem Eingangssplitter (27), der in der Eingangsverbindung (5) angeordnet ist, um das optische Signal zusätzlich an einem Abzweig (29) des Eingangssplitters (27) auszugeben,
wobei der Hochfrequenzsignaleingang (15) mit dem Spannungseingang (13) des elektro-optischen Amplitudenmodulators (9) verbunden ist,
wobei der Abzweig (29) des Eingangssplitters (27) mit dem optischen Eingang des ersten Photodetektors (31) verbunden ist,
wobei der Ausgang des ersten Photodetektors (31) mit dem Lokaloszillatoreingang (33) des Phasenverschiebungsmischers (35) verbunden ist,
wobei der optische Ausgang (11) des elektro-optischen Amplitudenmodulators (9) mit dem optischen Eingang des zweiten Photodetektors (53) verbunden ist,
wobei der Ausgang des zweiten Photodetektors (53) mit dem Hochfrequenzeingang (37) des Phasenverschiebungsmischers (35) verbunden ist und
wobei der Ausgang (39) des Phasenverschiebungsmischers (35) mit dem Reglereingang des Phasenverschiebungsreglers (51) verbunden ist,
**dadurch gekennzeichnet, dass**
ein erster Leistungsteiler (55), der einen Eingang (57), einen ersten Ausgang (59) und einen zweiten Ausgang (61) aufweist und
ein Vorspannungsregler (73) vorgesehen sind, der einen Reglereingang und einen Reglerausgang aufweist,
wobei der Ausgang des zweiten Photodetektors (53) mit dem Eingang (57) des ersten Leistungsteilers (55) verbunden ist,
wobei der erste Ausgang (59) des ersten Leistungsteilers (55) mit dem Hochfrequenzeingang (37) des Phasenverschiebungsmischers (35) verbunden ist,
wobei der zweite Ausgang (61) des ersten Leistungsteilers (55) mit dem Reglereingang des Vorspannungsreglers (73) verbunden ist und
wobei der Reglerausgang des Vorspannungsreglers (73) mit einem Vorspannungseingang (17) des elektro-optischen Amplitudenmodulators (9) verbunden ist,
sodass das am optischen Ausgang (11) des elektro-optischen Amplitudenmodulators (9) ausgegebene Signal möglichst konstant ist.

2. System nach Anspruch 1, wobei der elektro-optische Modulator (9) als Mach-Zehnder-Modulator ausgeführt ist.

3. System nach einem der Ansprüche 1 oder 2, wobei zwischen dem Ausgang des ersten Photodetektors (31) und dem Lokaloszillatoreingang (33) des Phasenverschiebungsmischers (35) ein Frequenzteiler (43) vorgesehen ist.

4. System nach einem oder mehreren der Ansprüche 1 bis 3, mit einem Strahlteiler (83), der einen Eingang, einen ersten Ausgang und einen zweiten Ausgang aufweist,
mit einem Strahlkombinierer (85), der einen ersten Eingang, einen zweiten Eingang und einen Ausgang aufweist und
mit einer optischen Verzögerungsstrecke (87),
wobei der Strahlteiler (83) dem Eingangssplitter (27) in der Eingangsverbindung (5) nachgeschaltet ist,
wobei der erste Ausgang des Strahlteilers (83) mit dem ersten Eingang des Strahlkombinierers (85) verbunden ist, der dem Strahlteiler (83) in der Eingangsverbindung (5) nachgeschaltet ist, und
wobei die optische Verzögerungsstrecke (87) den zweiten Ausgang des Strahlteilers (83) mit dem zweiten Eingang des Strahlkombinierers verbindet (85).

5. System nach Anspruch 4, wobei die Länge der optischen Verzögerungsstrecke (87) derart bemessen ist, dass die Verzögerung, die der Teil eines optischen Signals, der aus dem zweiten Ausgang des Strahlteilers (83) austritt und in den zweiten Eingang des Strahlkombinierers (85) eintritt, gegenüber dem Teil des optischen Signals, der vom ersten Ausgang des Strahlteilers (83) zum ersten Eingang des Strahlkombinierers (85) läuft, erfährt, einem Viertel des Abstandes zwischen zwei Pulsen des gepulsten optischen Signals entspricht.

6. System nach Anspruch 4, wobei die Länge der Verzögerungsstrecke (87) derart bemessen ist, dass die Verzögerung, die der Teil eines optischen Signals, der aus dem zweiten Ausgang des Strahlteilers (83) austritt und in den zweiten Eingang des Strahlkombinierers (85) eintritt, gegenüber dem Teil des optischen Signals, der vom ersten Ausgang des Strahlteilers (83) zum ersten Eingang des Strahlkombinierers (85) läuft, erfährt, der Hälfte des Abstandes zwischen zwei Pulsen des gepulsten optischen Signals entspricht.

7. System nach einem der Ansprüche 4 bis 6, mit einer ersten Wellenplatte (79) zum Drehen der Polarisationsebene des auf die Wellenplatte (79) fallenden optischen Signals,
wobei die erste Wellenplatte (79) zwischen dem Eingangssplitter (27) und dem Strahlteiler (83) angeordnet und der Strahlteiler (83) als polarisierender Strahlteiler ausgebildet ist,
wobei die erste Wellenplatte (79) eine Stelleinrichtung mit einem Steuersignaleingang (89) zum gesteuerten Einstellen des Drehwinkels der Polarisation aufweist,
wobei der elektro-optische Amplitudenmodulator (9) einen invertierten optischen Ausgang (91) aufweist, dessen Ausgangssignal bei einem in den optischen Eingang (7) des Amplitudenmodulators (9) eingehenden optischen Signal gegenüber dem eingehenden Signal um das gleiche Maß aber mit umgekehrtem Vorzeichen geändert ist wie das Ausgangssignal am optischen Ausgang (11) des Amplitudenmodulators (9),
mit einem optischen Koppler (93) mit einem ersten Eingang, einem zweiten Eingang und einem Ausgang,
wobei der Ausgang des optischen Kopplers (93) mit dem optischen Eingang des zweiten Photodetektors (53) verbunden ist,
wobei der optische Ausgang des Amplitudenmodulators (11) mit dem ersten Eingang des optischen Kopplers (93) verbunden ist,
wobei der invertierte optische Ausgang (91) des Amplitudenmodulators (9) über eine zweite optische Verzögerungsstrecke (95) mit dem zweiten Eingang des Kopplers (93) verbunden ist,
mit einem Wellenplattenmischer (119), der einen Hochfrequenzeingang (121), einen Lokaloszillatoreingang (125) und einen Ausgang (131) aufweist,
mit einem Wellenplattenregler (135), der einen Reglereingang und einen Reglerausgang, der mit dem Steuersignaleingang (89) der Stelleinrichtung der ersten Wellenplatte (79) verbunden ist, aufweist,
mit einem Vorspannungsmischer (97), der einen Hochfrequenzeingang (99), einen Lokaloszillatoreingang (109) und einen Ausgang (105) aufweist,
wobei der Ausgang des ersten Photodetektors mit dem Lokaloszillatoreingang des Vorspannungsmischers und mit dem Lokaloszillatoreingang des Wellenplattenmischers verbunden ist,
wobei der Ausgang des zweiten Photodetektors (53) mit dem Hochfrequenzeingang (99) des Vorspannungsmischers (97) verbunden ist,
wobei der Ausgang (105) des Vorspannungsmischers (97) mit Reglereingang des Vorspannungsreglers (73) verbunden ist,
wobei der Ausgang des zweiten Photodetektors (53) mit dem Hochfrequenzeingang (121) des Wellenplattenmischers (119) verbunden ist und
wobei der Ausgang (131) des Wellenplattenmischers (119) mit dem Reglereingang des Wellenplattenreglers (135) verbunden ist.

8. Hochfrequenzsynchronisationseinrichtung mit einem Hochfrequenzoszillator (19), der einen Steuereingang (23) zum Steuern der Frequenz und/oder der Phasenlage des ausgegebenen Hochfrequenzsignals und einen Hochfrequenzausgang (21) aufweist,
mit einem System nach einem oder mehreren der Ansprüche 1 bis 7,
wobei der Reglerausgang des Phasenverschiebungsreglers (51) mit dem Steuereingang (23) verbunden ist und
wobei der Hochfrequenzausgang (25) mit dem Hochfrequenzsignaleingang (15) des Systems verbunden ist.

9. Optische Synchronisationseinrichtung zum Synchronisieren eines gepulsten optischen Signals mit einem Hochfrequenzsignal,
mit einen Quelle (3') zum Erzeugen des gepulsten optischen Signals, die einen Signalausgang und einen Steuereingang zum Steuern der Frequenz und/oder der Phasenlage des ausgegebenen optischen Signals aufweist, und
mit einem System nach einem oder mehreren der Ansprüche 1 bis 7,
wobei in der Eingangsverbindung (5) ein zweiter Splitter (79) dem Eingangssplitter (27) nachgeschaltet ist, um das optische Signal zusätzlich an einem Abzweig (81) des zweiten Splitters (79) auszugeben,
wobei der Reglerausgang des Phasenverschiebungsreglers (51) mit dem Steuereingang verbunden ist und
wobei an dem Abzweig (81) des zweiten Splitters (79) das zum Hochfrequenzsignal synchronisierte gepulste optische Signal ausgegeben wird.

## Claims

1. A system for generating a synchronization control signal in order to synchronize a high-frequency signal with a frequency f_{Hf} and a pulsed optical signal,
comprising a high-frequency signal input (15) for the high-frequency signal,
comprising an input (1) for the optical signal pulsed at a repetition rate f_{R},
comprising an electro-optical amplitude modulator (9) that has an optical input (7), a voltage input (13) that is connected to a phase member of the amplitude modulator (9), and an optical output (11),
comprising a phase shift regulator (51) that has a regulator input and a regulator output at which the synchronisation control signal is output,
comprising a phase shift mixer (35) that has a high-frequency input (37), a local oscillator input (33), and an output (39),
comprising a first and a second photodetector (31, 53) that have an optical input and an output,
comprising an optical input connection (5) that connects the input (1) for the optical signal to the optical input (7) of the electro-optical amplitude modulator (9), and
comprising an input splitter (27) that is arranged in the input connection (5) in order to additionally output the optical signal at a branch (29) of the input splitter (27),
wherein the high-frequency signal input (15) is connected to the voltage input (13) of the electro-optical amplitude modulator (9),
wherein the branch (29) of the input splitter (27) is connected to the optical input of the first photodetector (31),
wherein the output of the first photodetector (31) is connected to the local oscillator input (33) of the phase shift mixer (35),
wherein the optical output (11) of the electro-optical amplitude modulator (9) is connected to the optical input of the second photodetector (53),
wherein the output of the second photodetector (53) is connected to the high-frequency input (37) of the phase shift mixer (35), and
wherein the output (39) of the phase shift mixer (35) is connected to the regulator input of the phase shift regulator (51),
**characterized in that**
a first power divider (55) that has an input (57), a first output (59), and a second output (61) and
a bias regulator (73) that has a regulator input and a regulator output are provided,
wherein the output of the second photodetector (53) is connected to the input (57) of the first power divider (55),
wherein the first output (59) of the first power divider (55) is connected to the high-frequency input (37) of the phase shift mixer (35),
wherein the second output (61) of the first power divider (55) is connected to the regulator input of the bias regulator (73), and
wherein the regulator output of the bias regulator (73) is connected to a bias input (17) of the electro-optical amplitude modulator (9), such that the signal output at the optical output (11) of the electro-optical amplitude modulator (9) is as constant as possible.

2. The system according to claim 1, wherein the electro-optical modulator (9) is designed as a Mach-Zehnder modulator.

3. The system according to any one of claims 1 or 2, wherein a frequency divider (43) is provided between the output of the first photodetector (31) and the local oscillator input (33) of the phase shift mixer (35).

4. The system according to one or more of claims 1 to 3,
comprising a beam splitter (83) that has an input, a first output, and a second output,
comprising a beam combiner (85) that has a first input, a second input, and an output, and
comprising an optical delay line (87),
wherein the beam splitter (83) is connected downstream of the input splitter (27) in the input connection (5),
wherein the first output of the beam splitter (83) is connected to the first input of the beam combiner (85), which is connected downstream of the beam splitter (83) in the input connection (5), and
wherein the optical delay line (87) connects the second output of the beam splitter (83) to the second input of the beam combiner (85).

5. The system according to claim 4, wherein the length of the optical delay line (87) is such that the delay experienced by the part of an optical signal that exits the second output of the beam splitter (83) and enters the second input of the beam combiner (85) with respect to the part of the optical signal that travels from the first output of the beam splitter (83) to the first input of the beam combiner (85) corresponds to one quarter of the distance between two pulses of the pulsed optical signal.

6. The system according to claim 4, wherein the length of the delay line (87) is such that the delay experienced by the part of an optical signal that exits the second output of the beam splitter (83) and enters the second input of the beam combiner (85) with respect to the part of the optical signal that travels from the first output of the beam splitter (83) to the first input of the beam combiner (85) corresponds to one half of the distance between two pulses of the pulsed optical signal.

7. The system according to any one of claims 4 to 6, comprising a first waveplate (79) for rotating the polarization plane of the optical signal incident on the waveplate (79),
wherein the first waveplate (79) is arranged between the input splitter (27) and the beam splitter (83) and the beam splitter (83) is designed as a polarizing beam splitter,
wherein the first waveplate (79) has an adjusting apparatus comprising a control signal input (89) for setting the angle of rotation of the polarization in a controlled manner,
wherein the electro-optical amplitude modulator (9) has an inverted optical output (91) of which the output signal, in the event of an optical signal entering the optical input (7) of the amplitude modulator (9), is changed with respect to the incoming signal by the same amount, but with the opposite sign, as the output signal at the optical output (11) of the amplitude modulator (9),
comprising an optical coupler (93) comprising a first input, a second input, and an output, wherein the output of the optical coupler (93) is connected to the optical input of the second photodetector (53),
wherein the optical output of the amplitude modulator (11) is connected to the first input of the optical coupler (93),
wherein the inverted optical output (91) of the amplitude modulator (9) is connected to the second input of the coupler (93) via a second optical delay line (95),
comprising a waveplate mixer (119) that has a high-frequency input (121), a local oscillator input (125), and an output (131),
comprising a waveplate regulator (135) that has a regulator input and a regulator output that is connected to the control signal input (89) of the adjusting apparatus of the first waveplate (79),
comprising a bias mixer (97) that has a high-frequency input (99), a local oscillator input (109), and an output (105),
wherein the output of the first photodetector is connected to the local oscillator input of the bias mixer and to the local oscillator input of the waveplate mixer,
wherein the output of the second photodetector (53) is connected to the high-frequency input (99) of the bias mixer (97),
wherein the output (105) of the bias mixer (97) is connected to the regulator input of the bias regulator (73),
wherein the output of the second photodetector (53) is connected to the high-frequency input (121) of the waveplate mixer (119), and
wherein the output (131) of the waveplate mixer (119) is connected to the regulator input of the waveplate regulator (135).

8. A high-frequency synchronization apparatus comprising a high-frequency oscillator (19) that has a control input (23) for controlling the frequency and/or the phase position of the output high-frequency signal and a high-frequency output (21),
comprising a system according to one or more of claims 1 to 7,
wherein the regulator output of the phase shift regulator (51) is connected to the control input (23), and
wherein the high-frequency output (25) is connected to the high-frequency signal input (15) of the system.

9. An optical synchronization apparatus for synchronizing a pulsed optical signal with a high-frequency signal,
comprising a source (3') for generating the pulsed optical signal and that has a signal output and a control input for controlling the frequency and/or phase position of the output optical signal, and
comprising a system according to one or more of claims 1 to 7,
wherein a second splitter (79) is connected downstream of the input splitter (27) in the input connection (5) in order to additionally output the optical signal at a branch (81) of the second splitter (79),
wherein the regulator output of the phase shift regulator (51) is connected to the control input, and
wherein the pulsed optical signal that is synchronized to the high-frequency signal is output at the branch (81) of the second splitter (79).

## Revendications

1. Système pour la production d'un signal de commande de synchronisation, afin de synchroniser un signal à haute fréquence avec une fréquence f_{HF} et un signal optique pulsé,
avec une entrée de signal à haute fréquence (15) pour le signal à haute fréquence,
avec une entrée (1) pour un signal optique pulsé avec un taux de répétition f_{R},
avec un modulateur d'amplitude électrooptique (9), lequel présente une entrée optique (7), une entrée de tension (13), laquelle est connectée à un élément de phase du modulateur d'amplitude (9), et une sortie optique (11),
avec un régulateur de déphasage (51), lequel présente une entrée de régulateur et une sortie de régulateur sur laquelle le signal de commande de synchronisation est sorti,
avec un mélangeur de déphasage (35), lequel présente une entrée haute fréquence (37), une entrée d'oscillateur local (33) et une sortie (39),
avec un premier et un deuxième photodétecteurs (31, 53), lesquels présentent une entrée optique et une sortie,
avec une connexion d'entrée optique (5), laquelle connecte l'entrée (1) pour le signal optique à l'entrée optique (7) du modulateur d'amplitude électrooptique (9), et
avec un diviseur d'entrée (27), lequel est disposé dans la connexion d'entrée (5), afin, de surcroît, de sortir le signal optique sur une dérivation (29) du diviseur d'entrée (27),
l'entrée de signal à haute fréquence (15) étant connecté à l'entrée de tension (13) du modulateur d'amplitude électrooptique (9),
la dérivation (29) du diviseur d'entrée (27) étant connectée à l'entrée optique du premier photodétecteur (31),
la sortie du premier photodétecteur (31) étant connectée à l'entrée d'oscillateur local (33) du mélangeur de déphasage (35),
la sortie optique (11) du modulateur d'amplitude électrooptique (9) étant connectée à l'entrée optique du deuxième photodétecteur (53),
la sortie du deuxième photodétecteur (53) étant connectée à l'entrée haute fréquence (37) du mélangeur de déphasage (35), et
la sortie (39) du mélangeur de déphasage (35) étant connectée à l'entrée de régulateur du régulateur de déphasage (51),
**caractérisé en ce que**
un premier diviseur de puissance (55), lequel présente une entrée (57), une première sortie (59) et une deuxième sortie (61), et
un régulateur de polarisation (73) étant prévu, lequel présente une entrée de régulateur et une sortie de régulateur,
la sortie du deuxième photodétecteur (53) étant connectée à l'entrée (57) du premier diviseur de puissance (55),
la première sortie (59) du premier diviseur de puissance (55) étant connectée à l'entrée haute fréquence (37) du mélangeur de déphasage (35),
la deuxième sortie (61) du premier diviseur de puissance (55) étant connectée à l'entrée de régulateur du régulateur de polarisation (73), et
la sortie de régulateur du régulateur de polarisation (73) étant connectée à une entrée de polarisation (17) du modulateur d'amplitude électrooptique (9),
de telle sorte que le signal sorti sur la sortie optique (11) du modulateur d'amplitude électrooptique (9) est aussi constant que possible.

2. Système selon la revendication 1, le modulateur électrooptique (9) étant réalisé comme un modulateur Mach-Zehnder.

3. Système selon l'une des revendications 1 ou 2, un diviseur de fréquence (43) étant prévu entre la sortie du premier photodétecteur (31) et l'entrée d'oscillateur local (33) du mélangeur de déphasage (35).

4. Système selon une ou plusieurs des revendications 1 à 3,
avec un diviseur de faisceau (83), lequel présente une entrée, une première sortie et une deuxième sortie,
avec un combinateur de faisceau (85), lequel présente une première entrée, une deuxième entrée et une sortie et
avec une ligne de retard optique (87),
le diviseur de faisceau (83) étant en aval du diviseur d'entrée (27) dans la connexion d'entrée (5),
la première sortie du diviseur de faisceau (83) étant connectée à la première entrée du combinateur de faisceau (85), lequel est en aval du diviseur de faisceau (83) dans la connexion d'entrée (5), et
la ligne de retard optique (87) connectant la deuxième sortie du diviseur de faisceau (83) à la deuxième entrée du combinateur de faisceau (85).

5. Système selon la revendication 4, la longueur de la ligne de retard optique (87) étant dimensionnée afin que le retard accusé par la partie d'un signal optique qui sort de la deuxième sortie du diviseur de faisceau (83) et entre dans la deuxième entrée du combinateur de faisceau (85) par rapport à la partie du signal optique qui va de la première sortie du diviseur de faisceau (83) à la première entrée du combinateur de faisceau (85) corresponde à un quart de la distance entre deux impulsions du signal optique pulsé.

6. Système selon la revendication 4, la longueur de la ligne de retard optique (87) étant dimensionnée afin que le retard accusé par la partie d'un signal optique qui sort de la deuxième sortie du diviseur de faisceau (83) et entre dans la deuxième entrée du combinateur de faisceau (85) par rapport à la partie du signal optique qui va de la première sortie du diviseur de faisceau (83) à la première entrée du combinateur de faisceau (85) corresponde à la moitié de la distance entre deux impulsions du signal optique pulsé.

7. Système selon l'une des revendications 4 à 6, avec une première lame d'onde (79) pour la rotation du plan de polarisation du signal optique tombant (79) sur la lame d'onde,
la première lame d'onde (79) étant disposée entre le diviseur d'entrée (27) et le diviseur de faisceau (83) et le diviseur de faisceau (83) étant conçu comme un diviseur de faisceau polarisant,
la première lame d'onde (79) présentant un dispositif de réglage avec une entrée de de signal de commande (89) pour le réglage contrôlé de l'angle de rotation de la polarisation,
le modulateur d'amplitude électrooptique (9) présentant une sortie optique inversée (91), dont le signal de sortie est modifié par un signal optique entrant dans l'entrée optique (7) du modulateur d'amplitude (9) par rapport au signal entrant, avec la même grandeur, mais avec signe inversé, que le signal de sortie sur la sortie optique (11) du modulateur d'amplitude (9),
avec un coupleur optique (93) avec une première entrée, une deuxième entrée et une sortie,
la sortie du coupleur optique (93) étant connectée à l'entrée optique du deuxième photodétecteur (53),
la sortie optique du modulateur d'amplitude (11) étant connectée à la première entrée du coupleur optique (93),
la sortie optique inversée (91) du modulateur d'amplitude (9) étant connectée à la deuxième entrée du coupleur (93) par une deuxième ligne de retard optique (95),
avec un mélangeur de lame d'onde (119), lequel présente une entrée haute fréquence (121), une entrée d'oscillateur local (125) et une sortie (131),
avec un régulateur de lame d'onde (135), lequel présente une entrée de régulateur et une sortie de régulateur, laquelle est connectée à l'entrée de signal de commande (89) du dispositif de réglage de la première lame d'onde (79),
avec un mélangeur de polarisation (97), lequel présente une entrée haute fréquence (99), une entrée d'oscillateur local (109) et une sortie (105),
la sortie du premier photodétecteur étant connectée à l'entrée d'oscillateur local du mélangeur de polarisation et à l'entrée d'oscillateur local du mélangeur de lame d'onde,
la sortie du deuxième photodétecteur (53) étant connectée à l'entrée haute fréquence (99) du mélangeur de polarisation (97),
la sortie (105) du mélangeur de polarisation (97) étant connectée à l'entrée de régulateur du régulateur de polarisation (73),
la sortie du deuxième photodétecteur (53) étant connectée à l'entrée haute fréquence (121) du mélangeur de lame d'onde (119), et
la sortie (131) du mélangeur de lame d'onde (119) étant connectée à l'entrée de régulateur du régulateur de lame d'onde (135).

8. Dispositif de synchronisation haute fréquence avec un oscillateur haute fréquence (19), lequel présente une entrée de commande (23) pour le contrôle de la fréquence et/ou de la position de phase du signal haute fréquence et une sortie haute fréquence (21),
avec un système selon une ou plusieurs des revendications 1 à 7,
la sortie de régulateur du régulateur de déphasage (51) étant connectée à l'entrée de commande (23) et
la sortie haute fréquence (25) étant connectée à l'entrée de signal à haute fréquence (15) du système.

9. Dispositif de synchronisation optique pour la synchronisation d'un signal optique pulsé avec un signal à haute fréquence,
avec une source (3') pour la génération du signal optique pulsé, laquelle présente une sortie de signal et une entrée de commande pour le contrôle de la fréquence et/ou de la position de phase du signal optique sorti, et
avec un système selon une ou plusieurs des revendications 1 à 7,
un deuxième diviseur (79) étant en aval du diviseur d'entrée (27) dans la connexion d'entrée (5), afin, de surcroît, de sortir le signal optique sur une dérivation (81) du deuxième diviseur (79),
la sortie de régulateur du régulateur de déphasage (51) étant connectée à l'entrée de commande et
le signal optique pulsé synchronisé avec le signal à haute fréquence étant sorti sur la dérivation (81) du deuxième diviseur (79).
